# EUROPEAN PATENT APPLICATION

(11) **EP 2 067 686 A1**
(43) Date of publication of application: **10.06.2009**
(21) Application number: 07122557.7
(22) Date of filing: 06.12.2007
(51) Int. Cl.: B62B 3/00

(54) **Transport device for cream yeast**

(71) Applicant: AB Mauri Netherlands B.V., 3316 BE Dordrecht (NL)
(72) Inventor: Nobel, Leo, 3284 XD, Zuid-Beijerland (NL)
(74) Representative: van Heuvel, Margaretha

(57) **Abstract**

The present invention discloses a device for transport and use of stabilised cream yeast comprising a container for holding the cream yeast and a transportable trolley in the shape of a cage wherein the container is placed. The trolley comprises a bottom platform supported on wheels, which platform is provided with walls each composed of a grid formed by intercrossed wires and/or of vertically or horizontally positioned bars, surrounded by a frame of metallic tubing. The container is designed to accommodate the dimensions of the trolley.

## Description

The invention relates to a device for the transportation, storage and use of viscous liquid materials having a limited shelf life, such as cream yeast.

Liquid yeast used in the manufacture of bread, fermented cakes and the like is a suspension of baker's yeast cells with a yeast dry matter content usually between 5 and 25% (w/w). Cream yeast is a special form of liquid yeast and usually has a dry matter content between 17 and 23% (w/w). It is a product that may be obtained directly after the fermentation step in the yeast production process, optionally after one or several washing steps. Liquid yeast may also be obtained by suspending compressed yeast or dry yeast.

Liquid yeast products are currently available in two forms. The first one is not stabilised and needs to be stirred in order to prevent sedimentation of yeast cells. The second one is a stabilised product that remains homogeneous due to the presence of a stabiliser that prevents sedimentation of the yeast cells, such as xanthan gum (EP 0 461 725). Liquid yeast may further comprise one or more processing aids with dough and/or bread improving properties.

For large industrial bakeries a cream yeast is generally provided in bulk at the bakery site. Cream yeast is delivered by bulk tankers to large in-plant holding tanks, which tanks are integrated into the production and control system of the bakery. Large industrial bakeries mostly use unstabilised cream yeast in quantities of 5,000 - 25,000 litres per week.

Medium size bakeries mostly use stabilised cream yeast that is supplied in containers of 50 - 1000 litres, usually once a week. After use, the containers are returned to the yeast producer where they are cleaned and refilled.

EP 0 599 776 discloses an apparatus for handling unstabilised cream yeast comprising a housing having means to facilitate transportation of the apparatus. The housing is mounted on a chassis including channel members to receive the tines of a fork lift truck and further being provided with wheels. The housing further has incorporated a holding vessel having an inlet positioned at the upper side and an outlet positioned at the bottom side of the vessel. Control means for maintaining cream yeast at desired conditions in the vessel include a refrigerator unit and a mixer.

Filled containers with a size of about 150 - 1000 litres have the problem of easily tilting during transport. Due to this problem, transport firms frequently refuse to transport such containers. To prevent tilting, it is common practice for many years to not completely fill the containers with product or to use smaller containers. This practice results in a loss of container capacity, a decrease in ease of handling and an increase in transport costs.

The present invention provides an device for transport and use of stabilised cream yeast that enables easy transport of cream yeast, allows complete filling of the container with cream yeast and does not result in easy tilting during transport.

Thus, there is provided a device for transport and use of stabilised cream yeast that comprises a container for holding the cream yeast and a transportable trolley in the shape of a cage wherein the container is placed during its transport and use.

Figure 1 shows a perspective view of an embodiment of a device covered by the scope of the appended claims.

Figure 2 shows a cross-section of the device shown in Figure 1.

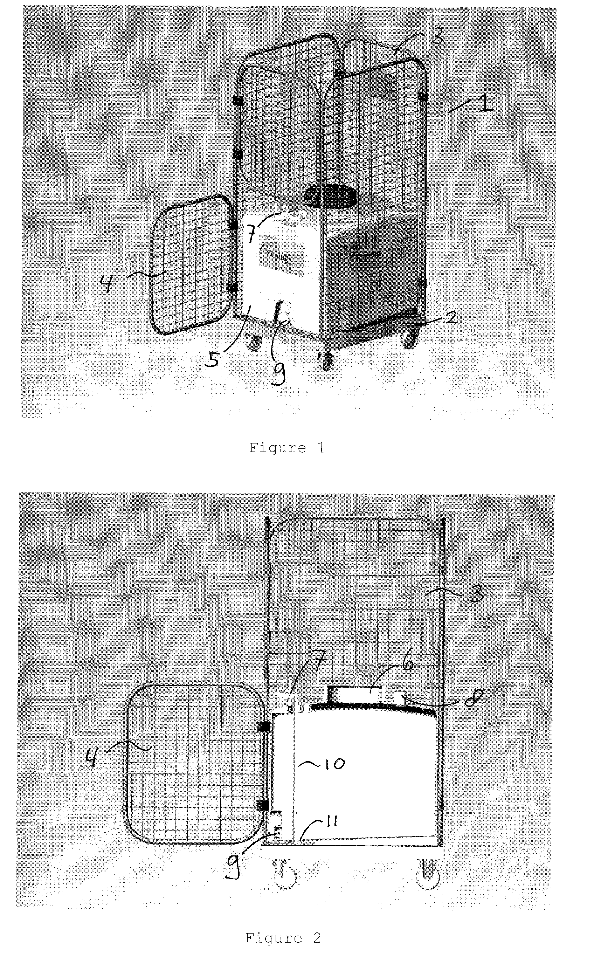

Referring to Figures 1 and 2, the transportable trolley in the shape of a cage 1 comprises a bottom platform 2 supported on wheels, which platform is provided with walls 3 each composed of a grid formed by intercrossed wires and/or of vertically or horizontally positioned bars, surrounded by a frame of metallic tubing. Usually, three of the walls of the trolley are secured to the bottom platform and one of the walls is in the form of a door 4 for introduction and removal of the container. The bottom platform 2 may comprise a grid- or bar-like structure as specified above and/or a solid plate made of metal or synthetic polymer.

The container 5 is suitable for storage of stabilised cream yeast and has a size that is designed to accommodate the dimensions of the trolley. It typically has a volume of 50 - 1000 litres, preferably 50 - 700 litres. The container is provided with an inlet 6 for receiving cream yeast and an outlet 7 for dosing of cream yeast. The container further may be provided with a venting means 8 and an additional in- and/or outlet for cleaning the container, such as the outlet 9.

In a preferred embodiment, the outlet 7 for dosing of cream yeast is provided at the upper side of the container. In this way no additional space at the bottom side of the container is necessary to accommodate an outlet placed at the bottom side of the container, being the commonly applied location of the outlet. This allows the yeast container to be placed in an as low position as possible. To allow dosing of cream yeast using an outlet at the upper side of the container, the outlet is provided with a riser 10 extending to the bottom of the container. Preferably, the bottom of the container is provided with a well 11 for receiving the riser.

To ensure a substantially complete emptying of the container, the container may be placed in a small angle with the horizontal plane, in such a way that the outlet is at the lowest position. This can for instance be done by placing a wedge under the container.

The container may be made from any suitable material, e.g. steel or a synthetic polymer.

To effectuate dosing of cream yeast, the outlet of the yeast container conveniently is connected to a dosing pump. Alternatively, the container may be emptied by applying pressure onto the container.

The transportable trolley typically has a bottom length and width varying between 50 and 100 cm. The height of the trolley may vary between 80 and 200 cm.

In one embodiment, the trolley has a bottom surface that accommodates the length and width of the container, but a height that exceeds the height of the yeast container. For instance, the height of the trolley is about 1.5 - 2 times the height of the yeast container. When a container is placed, the trolley is effectively divided in two compartments, the upper side of the yeast container functioning as the bottom part of the upper compartment of the trolley. The two compartments may be provided with separate doors. The upper compartment may be used for transporting and/or storing other goods that are distributed to and/or used by the bakery.

The transport device according to the invention advantageously fits in the modular trolley system used by distributors dealing with complex deliveries composed from various separate streams of goods.

In addition to use for transport of cream yeast, the device is suitable for transport and use of any other liquid material.

## Claims

1. A device for transport and use of stabilised cream yeast comprising a container for holding the cream yeast and a transportable trolley in the shape of a cage wherein the container is placed.

2. The device of claim 1, wherein the trolley comprises a bottom platform supported on wheels, which platform is provided with walls each composed of a grid formed by intercrossed wires and/or of vertically or horizontally positioned bars, surrounded by a frame of metallic tubing.

3. The device of claim 1 or 2, wherein the container is designed to accommodate the dimensions of the trolley.

4. The device of any one of the claims 1 to 3, the container being provided with an inlet for receiving cream yeast and an outlet for dosing of cream yeast, wherein the outlet for dosing of cream yeast is provided at the upper side of the container.

5. The device of claim 4, wherein the outlet is provided with a riser extending to the bottom of the container.

6. The device of claim 5, wherein the bottom of the container is provided with a well for receiving the riser.

7. Use of the device of any one of the preceding claims for the transportation and use of stabilised cream yeast.
